# EUROPEAN PATENT APPLICATION

(11) **EP 4 738 283 A1**
(43) Date of publication of application: **06.05.2026**
(21) Application number: 24209369.8
(22) Date of filing: 29.10.2024
(51) Int. Cl.: G06V 10/80, G06V 20/56

(54) **MID-LEVEL ENSEMBLE FOR SENSOR FUSION**

(71) Applicant: Zenseact AB, 417 56 Gothenburg (SE)
(72) Inventor: JOHNANDER, Joakim, 587 37 Linköping (SE); FATEMI DEZFOULI, Maryam, 417 61 Göteborg (SE); LINDSTRÖM, Carl, 411 43 Göteborg (SE)
(74) Representative: Zacco Sweden AB

(57) **Abstract**

Computer-implemented methods and related aspects for generating prediction output for an Automated Driving System of a vehicle are disclosed. The computer-implemented method comprises obtaining, by one or more processors, a first sensor dataset originating from a first sensor, where the first sensor dataset comprises information about a portion of a surrounding environment of the vehicle. The computer-implemented method further comprises obtaining, by one or more processors, a second sensor dataset originating from a second sensor different from the first sensor, where the second sensor dataset comprises information about the portion of the surrounding environment of the vehicle. Further, the computer-implemented method comprises processing, by one or more processors, the first sensor dataset using a first ensemble of encoder networks, where the first ensemble of encoder networks comprises two or more encoder networks, each trained to output a first set of encoded features based on the first sensor dataset. The computer-implemented method further comprises processing, by one or more processors, the second sensor dataset using a second ensemble of encoder networks, where the second ensemble of encoder networks comprises two or more encoder networks, each trained to output a second set encoded features based on the second sensor dataset. The computer-implemented method further comprises fusing, by one or more processors, one or more sets of the first sets of encoded features with one or more sets of the second sets of encoded features using a fusion algorithm configured to fuse encoded features from two or more different datasets and to output a set of fused encoded features, and generating, by one or more processors, a prediction output based on the set of fused encoded features using a decoder network trained to solve a perception task or a planning task for the vehicle based on encoded sensor data features.

## Description

### TECHNICAL FIELD

The disclosed technology relates to methods and systems for generating prediction output for an Automated Driving System (ADS) of a vehicle. In particular, but not exclusively the disclosed technology relates to an architecture for a perception functionality of an ADS utilizing a mid-level ensemble of artificial neural networks.

### BACKGROUND

Deep neural networks (DNNs) are today used in many different fields of technology. The DNN's ability to identify and analyse complex relationships in data has made them suitable for automation of different tasks. In this capacity, DNNs has for instance found many useful functions within the field of computer vision, such as object detection and classification tasks. More specifically, the DNNs can be used for allowing computers to obtain a high-level understanding from digital images or video in order to form their perception the world around them. An example of such an application is within the field of autonomous driving.

Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (1 - 5) of driving automation, and in particular for level 4 and 5. ADS solutions have already found their way into a majority of the new cars on the market with only rising prospects of utilization in the not too distant future. An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as for example, radar, lidar, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

While improved accuracy and robustness of DNNs are constantly sought after, a trade-off between the complexity (e.g. in terms of size and network architecture) and computational efficiency (e.g. in terms of execution time, memory and processing power requirements) has to be made. One solution dealing with the former aspect is so called ensemble networks. Ensemble networks utilizes an ensemble of different DNNs to obtain an improved accuracy and robustness. More specifically, instead of just using a single DNN for a specific task, the input is fed through the ensemble of DNNs, and a combined output is formed from the individual outputs of the DNNs.

However, this way of implementing ensemble networks naturally leads to longer execution times, as well as requiring more computational power. Thus, it may make them unsuitable for applications where the DNNs are to be run on a continuous feed of input data in real-time. It also may make them unsuitable for being run on resource-limited hardware. There is therefore a need for new and improved solutions for performing perception tasks, in particular for automated driving systems.

### SUMMARY

The herein disclosed technology seeks to mitigate, alleviate or eliminate one or more of the above-identified deficiencies and disadvantages in the prior art to address various problems relating to accuracy and computational need for solving perception tasks in automated driving systems.

Various aspects and embodiments of the disclosed technology are defined below and in the accompanying independent and dependent claims.

A first aspect of the disclosed technology comprises a computer-implemented method for generating prediction output for an Automated Driving System of a vehicle. The computer-implemented method comprises obtaining, by one or more processors, a first sensor dataset originating from a first sensor, where the first sensor dataset comprises information about a portion of a surrounding environment of the vehicle. The computer-implemented method further comprises obtaining, by one or more processors, a second sensor dataset originating from a second sensor different from the first sensor, where the second sensor dataset comprises information about the portion of the surrounding environment of the vehicle. Further, the computer-implemented method comprises processing, by one or more processors, the first sensor dataset using a first ensemble of encoder networks, where the first ensemble of encoder networks comprises two or more encoder networks, each trained to output a first set of encoded features based on the first sensor dataset. The computer-implemented method further comprises processing, by one or more processors, the second sensor dataset using a second ensemble of encoder networks, where the second ensemble of encoder networks comprises two or more encoder networks, each trained to output a second set encoded features based on the second sensor dataset. The computer-implemented method further comprises fusing, by one or more processors, one or more sets of the first sets of encoded features with one or more sets of the second sets of encoded features using a fusion algorithm configured to fuse encoded features from two or more different datasets and to output a set of fused encoded features, and generating, by one or more processors, a prediction output based on the set of fused encoded features using a decoder network trained to solve a perception task or a planning task for the vehicle based on encoded sensor data features.

A second aspect of the disclosed technology comprises a computer program product comprising instructions which, when the program is executed by a computer, causes the computer to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computer, causes the computer to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for generating prediction output for an Automated Driving System of a vehicle. The system comprises a first ensemble of encoder networks, where the first ensemble of encoder networks comprises two or more encoder networks, each trained to output a set of encoded features based on a sensor dataset output from a first sensor. The system further comprises a second ensemble of encoder networks, where the second ensemble of encoder networks comprises two or more encoder networks, each trained to output a set encoded features based on a sensor dataset output from a second sensor. Here, the first sensor is different from the second sensor. The system further comprises a fusion algorithm configured to fuse encoded features from two or more different datasets and to output a set of fused encoded features, and a decoder network trained to solve a perception task or a planning task for the vehicle based on encoded sensor data features. Further, the system comprises one or more processors and one or more memory storage areas comprising program code. The one or more memory storage areas and the program code are configured to, with the one or more processors, cause the system to at least process a first sensor dataset using the first ensemble of encoder networks in order to obtain a first set of encoded features, the first sensor dataset comprising information about a portion of a surrounding environment of the vehicle, and process a second sensor dataset using the second ensemble of encoder networks in order to obtain a second set of encoded features, the second sensor dataset comprising information about the portion of the surrounding environment of the vehicle. The one or more memory storage areas and the program code are further configured to, with the one or more processors, cause the system to at least fuse one or more set of the first set of encoded features with one or more set of the second sets of encoded features using the fusion algorithm, and generate a prediction output based on the set of fused encoded features using the decoder network. With this aspect of the disclosed technology, similar advantages and preferred features are present as in the other aspects.

A fifth aspect of the disclosed technology comprises a vehicle comprising a system according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the computational need for solving perception tasks for automated driving system applications may be reduced as compared to traditional ensemble architectures.

An advantage of some embodiments is that the accuracy of the perception functionality in an automated driving system may be improved without drastically increasing the computational need.

An advantage of some embodiments is that information loss in the data processing pipeline from raw sensor data to prediction output may be reduced due to not having to use intermediate outputs before feeding data into the ensemble.

An advantage of some embodiments is that an efficient and automated data annotation solution may be provided.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is schematic flowchart representation of a method for generating prediction output for an Automated Driving System of a vehicle in accordance with some embodiments.
Fig. 2 is a schematic block diagram representation of a system for generating prediction output for an Automated Driving System of a vehicle in accordance with some embodiments.
Fig. 3 is a schematic illustration of a vehicle comprising a system for generating prediction output for an Automated Driving System of the vehicle in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

Deep neural networks, particularly for use in automated driving systems, are trained with large amounts of annotated data in order to ensure that the networks are capable of solving the desired task with sufficient accuracy. However, gaining access to large amounts of annotated data is extremely costly, thus improving the accuracy of the networks by increasing the amount of available annotated data is expensive.

However, another way to improve accuracy is to rely on multiple sensors. It is envisioned that the neural networks used for solving various perception tasks in ADS applications will rely on multiple sensors, and in particular, sensors of different modalities, such as for example cameras and lidars (and optionally radars) as they are considered to complement each other. For example, the camera may provide detections at long ranges, and it can be used to recognize signage, see lights (e.g., brake lights, headlights, or turn signals), whereas the lidar may provide more accurate depth estimations and stronger night-time performance.

Some embodiments herein propose a specific type of ensemble architecture that fuses sensor data from multiple sensors. In more detail, the architecture follows a general setup where the output from each sensor is encoded and fed to a fusion network, whereupon a task-specific head (decoder network) uses the fused data to provide a prediction output. In particular, it is herein proposed to ensemble the encoders, meaning that for the first sensor, a first ensemble of encoders is provided, and for the second sensor, a second ensemble of encoders is provided. This is what is herein referred to as "mid-level ensemble".

Moreover, the architecture as proposed herein differs from general ensemble architecture ("parallel networks"), where the full network (e.g., encoder and decoder) is ensembled and where the output therefrom may be fused. An advantage of using the mid-level ensemble architecture as proposed herein as compared to the "parallel networks", is that the mid-level ensemble architecture requires less computational power, thereby making it more suitable for applications where computational power is limited, such as e.g., in vehicles. Moreover, the mid-level ensemble architecture is easier to train as compared to a full network ensemble since the full network ensemble consists of full parallel networks that need to be trained separately. Moreover, compared to a simple architecture (no ensembles), increased accuracy is readily achievable since the different encoders within an ensemble can be trained on different datasets and therefore have different "specializations" (e.g., one encoder is better at detecting/classifying pedestrians, another encoder is better at detecting/classifying objects far away, another encoder is better at detecting/classifying objects in low visibility scenarios, and so forth).

Further, advantages in terms of reduced information loss due to not having to use intermediate outputs before feeding data into the ensemble. In more detail, if the ensemble were to be provided at a different stage of the processing pipeline, the ensemble would be fed with "intermediate outputs", meaning that some information may be lost in the generation of those intermediate outputs. The architecture proposed herein, utilises an ensemble architecture to process the sensor data and therefore provides as much information as possible to the ensemble.

Thus, by "ensembling" the encoder networks rather than the full networks ("parallel networks") advantages associated with ensembles in the form of improved predictive performance and uncertainty estimation capabilities are readily achievable, with less computational need. The uncertainty estimation capabilities are advantageous in implementations where the network architecture as proposed herein is used in an offline setup for generating automatic annotations. Moreover, one type of uncertainty estimations that ensembles are capable of providing is "epistemic uncertainty", which is the type of uncertainty that is present when the system is out-of-distribution (i.e., when being fed input that it is not similar to the data that was used during training). In more detail, in an automatic annotation setup, the system can be setup with large encoder networks (that may be too large to implement in an online setup in a vehicle) to get accurate prediction outputs that can be used as "pseudo-labels" for training smaller networks. Moreover, the uncertainty estimate can be used to discard those outputs where the system is uncertain, or to store them for subsequent manual annotation.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

In the present context, a "machine learning algorithm" or "neural network" refers to a computational model or set of techniques that are used to enable a computer to solve a task, such as for example, the vehicle's perception system to interpret and understand the surrounding environment. Perception tasks in ADS involve the vehicle's ability to detect and recognize objects, obstacles, road signs, lane markings, pedestrians, other vehicles, and various environmental conditions. The ADS may use machine learning algorithms to process sensor data, such as data from cameras, lidar, radar, and other sensors, to make informed decisions about how to navigate safely. These algorithms use data-driven techniques to analyse and classify objects, understand the road geometry, predict the movement of other road users, and/or assess potential risks in real-time. Common types of machine learning algorithms used in ADS perception tasks include deep neural networks, convolutional neural networks (CNNs) (e.g., for camera image processing, lidar output processing, etc.), recurrent neural networks (RNNs) (e.g., for sequence data), and various other techniques like support vector machines (SVM) and decision trees.

The machine-learning algorithms are implemented in some embodiments using publicly available suitable software development machine learning code elements, for example, such as those which are available in Pytorch, Keras, and TensorFlow or in any other suitable software development platform, in any manner known to be suitable to someone of ordinary skill in the art.

The terms "encoder" (or "encoder network") and "decoder" (or "decoder network") refer to components of neural network architectures designed to interpret and process sensory data from the vehicle's surroundings. The encoder is responsible for processing raw sensory inputs (e.g., camera images, lidar point clouds, or radar signals) and transforming them into a compact, abstract representation ("set of encoded features"). The decoder takes the encoded representation produced by the encoder and converts it back into a more interpretable output.

The compressed representation output from the encoder is often referred to as the "latent space" or "feature space". The latent space encodes important information about the input data (e.g., input image) in a compact form. Each dimension in the latent space can represent a different feature or concept. Moreover, the representation may for example capture essential features like object boundaries, relative distances, and object classifications, while discarding irrelevant information. For example, the encoder might process a camera image, identifying and representing critical features like the presence of pedestrians, lane markings, traffic signs, or other vehicles. Thus, the encoder reduces the high-dimensional sensory data into a set of meaningful features that can be used to understand the driving environment. This representation may serve as the basis for tasks such as object detection, semantic segmentation (understanding the context of objects), and depth estimation (determining distances to objects). For example, in a convolutional neural network (CNN) for object detection, the encoder would extract hierarchical features (edges, textures, shapes) from camera images and progressively build up a detailed understanding of what's present in the scene.

As mentioned, the decoder takes the encoded representation produced by the encoder ("set of encoded features") and converts it back into a more interpretable output. This could involve predicting object locations, labelling parts of the image, or providing additional details such as the orientation or movement of objects. For example, if the perception task is object detection, the decoder could predict bounding boxes around identified objects (e.g., pedestrians, cars) and assign class labels to these objects (e.g., "car," "stop sign," "pedestrian"). Similarly, if the perception task is semantic segmentation, the decoder could take the encoded features and assign a class label to every pixel in the image, such as identifying the road surface, pedestrian zones, or vehicles. Moreover, if the perception task is depth estimation, the decoder would take the encoded features and predict the distance to various objects or points in the environment.

The term "prediction output" (or "predictive output") refers to the final result generated by a neural network (e.g., a deep neural network) after processing an input, based on the patterns it has learned during training. In an encoder-decoder architecture, the "prediction output" refers to the output of the decoder. Moreover, the prediction output may be construed as the neural network's attempt to predict an outcome or make a decision about new data it hasn't seen before, using the learned weights and biases from its training phase. In the context of automated driving systems "prediction output" may refer to the network's predictions about the driving environment or the vehicle's future actions, based on the sensory data it receives (e.g., from cameras, radar, and lidar). For example, in a perception task in the form of a classification task, the predictive output could be the network identifying and classifying objects in the environment, such as pedestrians, vehicles, traffic signs, or lane markings. For instance, the neural network may predict the likelihood that an object detected ahead is a pedestrian versus a stationary object like a mailbox. Further, in a perception task in the form of a regression task the predictive output might be a continuous value like predicting the distance to the nearest obstacle, the speed of a neighbouring vehicle, or the time until a traffic light turns red. For example, the network might predict how far ahead the vehicle should start braking to stop safely at a red light.

Moreover, the prediction output may comprise probabilistic predictions. For example, the prediction output may comprise a probability of the input sensor dataset including an object of a particular class. In more detail, the prediction output may comprise a probability of each class of a plurality of classes for each pixel in an input image.

In the present context, a "sensor" (or "sensor device") refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

The "surrounding environment" of the ego-vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

As used herein, the term "in response to" may be construed to mean "when or "upon" or "if" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

### Embodiments

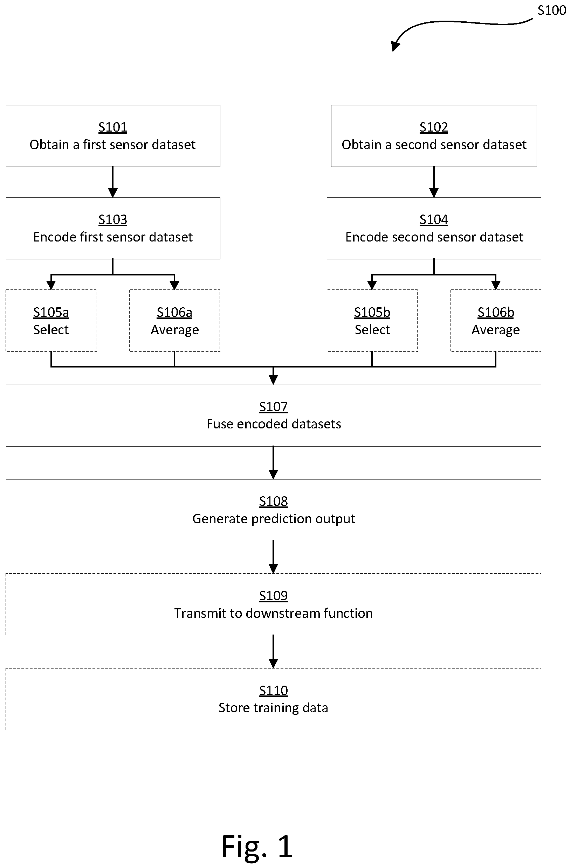

Fig. 1 is a schematic flowchart representation of a method S100 for generating prediction output for an Automated Driving System of a vehicle in accordance with some embodiments. The method S100 is a computer-implemented method S100, that may be performed online (e.g., by a processing system of the ADS-equipped vehicle) or offline (e.g., by a processing system of a computer or server). The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S101, by one or more processors, a first sensor dataset originating from a first sensor, where the first sensor dataset comprises information about a portion of a surrounding environment of the vehicle. The method S100 further comprises obtaining S102, by one or more processors, a second sensor dataset originating from a second sensor different from the first sensor, where the second sensor dataset comprises information about the portion of the surrounding environment of the vehicle. The first and second sensor datasets are assumed to be collected by the same vehicle during the same time period (or same time instances).

Here it can be noted that the various steps in the method S100 are not necessarily performed by the "same" one or more processors, but can be performed by different processors in a type of distributed processing architecture. However, naturally, the various steps of the method S100 may be performed by the same one or more processors.

In some embodiments, the first sensor and the second sensor are of the same modality. For example, both sensors may be cameras, albeit different cameras, or both sensors may be lidars. However, in some embodiments, the first sensor is of a different sensor modality as compared to the second sensor. For example, the first sensor may be a camera while the second sensor may be a lidar or a radar.

The term "radar" refers to "radio detecting and ranging" and may be understood as a system that uses radio waves to determine the distance (ranging), direction (azimuth and elevation angles), and radial velocity of objects relative to the site. A radar generally comprises a transmitter producing electromagnetic waves in the radio or microwaves domain, a transmitting antenna, a receiving antenna (often the same antenna is used for transmitting and receiving) and a receiver and processor to determine properties of the objects. Radio waves (pulsed or continuous) from the transmitter reflect off the objects and return to the receiver, giving information about the objects' locations and speeds. The term "lidar" refers to "light detection and ranging" or "laser imaging, detection, and ranging" and may be understood as a system for determining ranges by targeting an object or a surface with a laser (ultraviolet, visible, or near infrared light) and measuring the time for the reflected light to return to a receiver. A lidar may operate in a fixed direction (e.g., vertical) or it may scan multiple directions, in which case it is known as lidar scanning or 3D laser scanning.

The method S100 further comprises processing S103, by one or more processors, the first sensor dataset using a first ensemble of encoder networks. The first ensemble of encoder networks comprises two or more encoder networks, each trained to output a first set of encoded features based on the first sensor dataset. Further, the method S100 comprises processing S104, by one or more processors, the second sensor dataset using a second ensemble of encoder networks, wherein the second ensemble of encoder networks comprises two or more encoder networks, each trained to output a second set encoded features based on the second sensor dataset. Accordingly, the output from each of the sensors is fed to an ensemble of encoder networks to obtain a compressed representation output based on the sensor data.

Furthermore, in some embodiments, each encoder network of the first ensemble of encoder networks is trained on different training datasets as compared to the other encoder network(s) of the first ensemble of encoder networks. In other words, each encoder network within the first ensemble may be provided with a specific "specialization". For example, if the first sensor is a camera, and accordingly the first sensor dataset may be in the form of one or more images captured by the camera. Then, the first ensemble of encoder networks may include one encoder network that is better at identifying and representing the presence of pedestrians in the one or more images, one encoder network that is better at identifying and representing the presence of traffic lights, one encoder network that is better at identifying and representing predicted trajectories of surrounding road users, and so forth.

In some embodiments, each encoder network of the second ensemble of encoder networks is trained on different training datasets as compared to the other encoder network(s) of the second ensemble of encoder networks. Same as above, each encoder network within the second ensemble may be provided with a specific "specialization".

Moreover, in some aspects and embodiments, only one of the "encoders" is an ensemble of encoders, meaning that the output from the first sensor is processed by an ensemble of encoders while the output from the second sensor is processed by one encoder, or vice versa. Stated differently, the method S100 may comprise processing, by one or more processors, the first sensor dataset using a first encoder network trained to output a first set of encoded features based on the first sensor dataset, and processing, by one or more processors, the second sensor dataset using a second ensemble of encoder networks, wherein the second ensemble of encoder networks comprises two or more encoder networks, each trained to output a second set encoded features based on the second sensor dataset.

The method S100 further comprises fusing S107, by one or more processors, one or more sets of the first sets of encoded features with one or more sets of the second sets of encoded features using a fusion algorithm configured to fuse encoded features from two or more different datasets and to output a set of fused encoded features. In other words, feature vectors ("encoded features") from each ensemble of encoders are combined (e.g., via concatenation, averaging, or a learned transformation). Thereby the unique properties of each sensor's data are retained while combining them into a unified representation. The fusion algorithm may be in the form of a fusion network or fusion machine-learning algorithm (i.e., a neural network configured to fuse encoded features).

Fusing the encoded features may be referred to as "intermediate fusion" and is a technique that can be used for combining the feature representations of different sensor modalities after they have been encoded by their respective networks. In a Bird's Eye View (BEV) fusion approach, which is particularly suitable to be used in autonomous driving applications, sensor data (from cameras, LiDAR, and radar) is transformed into an encoded Bird's Eye View (BEV) representation (e.g., a BEV grid) before being fused and decoded. BEV is advantageous because it provides a top-down, geometrically consistent view of the environment, making it easier to perceive spatial relationships between objects (e.g., roads, cars, pedestrians) around the vehicle.

For example, if one assumes that the first sensor is a camera, and the second sensor is a lidar. Images captured by cameras are passed through the first ensemble of encoder networks (e.g., convolutional neural network (CNN) encoders), extracting high-level image features like edges, textures, and object classes. The output of the camera encoder is typically a set of feature maps (in 2D). Then, for the second sensor, point clouds captured by the lidar may be passed through an ensemble of voxel-based or point-based encoders (e.g., VoxeINet). This converts the sparse 3D point cloud data into a dense feature representation.

Before fusion S107, the encoded S103, S104 data from each sensor may be projected into a Bird's Eye View (BEV) format. In more detail, the first sets of encoded features (e.g., the CNN-encoded feature maps) are transformed from their 2D image-plane perspective to a top-down BEV representation. This involves projecting the features onto a common ground plane (e.g., using learned or geometric transformation matrices) to align them with the 3D environment. The lidar point clouds, which are inherently in 3D, may be "voxelized" into grid-like structures, making the transformation to BEV straightforward. Each voxel is collapsed into a 2D plane, creating a dense BEV feature map. The projection to BEV allows all sensor modalities to align on a common reference frame that simplifies the fusion S107 process.

Once all the encoded datasets are in BEV format, they may be fused S107. This fusion S107 may be done at the feature level, combining information from different sensors to create a richer and more robust representation of the environment. As mentioned above, there are several ways to implement intermediate fusion (e.g., via concatenation, averaging, or a learned transformation). In more detail, using a concatenation approach, the encoded data features (BEV feature maps) from each sensor are concatenated along the channel dimension. For example, if the camera BEV map has 128 channels and the LiDAR BEV map has 64 channels, the resulting fused map will have 192 channels. This method preserves all feature information from each modality. Using an element-wise summation approach, the encoded data features from each sensor are summed element-wise, fusing information directly at each spatial location. The element-wise summation approach can help balance the contributions of different sensors, though it may lose some modality-specific nuances. Using a learned transformation requires the fusion network to be trained so to "learn" a set of weights or transformation functions (such as fully connected layers or convolutional layers) that combine the BEV feature maps from each sensor. This allows the fusion network to learn which features from each sensor are most important and how to weigh them, depending on the scenario.

In some embodiments, the method S100 comprises selecting S105a, by one or more processors, one first set of encoded features from a plurality of first sets of encoded features output from the first ensemble of encoder networks, and selecting S105b, by one or more processors, one second set of encoded features from a plurality of second sets of encoded features output from the second ensemble of encoder networks. Accordingly, the fusing S107 may comprise fusing S107, by one or more processors, the selected S105a first set of encoded features with the selected S105b second set of encoded features using the fusion algorithm. In other words, one encoder network from each ensemble is selected S105a, S105b to provide the input to the fusion algorithm.

The selection S105a, S105b may be implemented in various ways. As mentioned in the foregoing, the various encoder networks within an ensemble may have different "specializations" and the selection S105a, S105b may accordingly be based on the current scenario (e.g., highway, urban environment, dense traffic, daytime, night time, rain, snow, etc.). In some embodiments, the different encoder networks within the ensembles may be used sequentially, so that only one encoder network within an ensemble provides an input to the fusion algorithm at each cycle. For example, with a 10 Hz rate and 10 encoder networks in an ensemble, each encoder network within the ensemble will be used once every second. So, encoder network 1 is used at to, encoder network 2 is used at t1 (t0+10ms), encoder network 3 is used at t2 (t1+10ms), and so forth. The selection S105a, S105b is advantageously used during inference (i.e., online in a vehicle) as it may reduce the computational load on the vehicle's hardware as the encoder networks do not have to run in parallel.

In some embodiments, the method S100 comprises averaging S106a, by one or more processors, a plurality of first sets of encoded features output from the first ensemble of encoder networks, and averaging S106b, by one or more processors, a plurality of second sets of encoded features output from the second ensemble of encoder networks. Accordingly, the fusing S107 may comprise fusing S107, by one or more processors, the averaged first sets of encoded features with the averaged second sets of encoded features using the fusion algorithm. Referring to the above example where the encoded features are represented in a BEV grid with vectors in each cell, then the averaging 106a, 106b may comprise averaging the vectors in each cell. In other examples, the encoded features may be represented by a set of deep feature vectors instead of a BEV grid. Then the averaging 106a, 106b may be performed across the encoder networks within an ensemble so that a first deep feature vector from each encoder network of an ensemble are averaged. In further examples, the averaging 106a, 106b may be performed by computing a score for each deep feature vector and then applying a softmax function to the scores over the encoder networks within an ensemble in order to compute a weight for one esemble member within a cell. Then, a weighted average may be computed.

Further, the method S100 comprises generating S108, by one or more processors, a prediction output based on the set of fused S107 encoded features using a decoder network trained to solve a perception task or a planning task for the vehicle based on encoded sensor data features. In other words, the encoder network is trained to receive encoded features as input and to output a prediction output. For example, the prediction output may include detection and classification of objects in the environment, (such as pedestrians, vehicles, traffic signs, or lane markings), the distance to one or more obstacles, the speed and/or heading of a neighbouring vehicle, or a prediction of how far ahead the vehicle should start braking to stop safely at a red light.

The entire network architecture (encoder networks, fusion network, decoder network) may be trained end-to-end using labelled/annotated data (e.g., sensor data paired with ground-truth annotations like object positions, lanes, etc.). Loss functions for object detection (e.g., classification and regression loss) and trajectory prediction may accordingly be applied to the decoder's output. By backpropagating through the decoders, fusion network, and encoders, the system learns to encode, fuse, and decode sensor data effectively.

The method S100 may further comprise transmitting S109, by one or more processors, the generated prediction output to one or more downstream functions of the Automated Driving System configured to control the vehicle based on the generated prediction output. A downstream function of the ADS may for example be a path planning module configured to generate candidate paths for execution by the vehicle at least partly based on the prediction output, a localizer module configured to output a position or pose (position and heading) of the vehicle at least partly based on the prediction output, or a decision and control module configured to output control signals to one or more actuators of the vehicle so to control a movement of the vehicle at least partly based on the prediction output.

In some embodiments, the method S100 comprises storing S110, by one or more processors, the first sensor dataset, the second sensor dataset, and the prediction output, wherein the prediction output forms pseudo-labels for the first sensor dataset and the second sensor dataset. Thus, the network architecture as proposed herein may advantageously be used to provide automatic annotations for sensor data that can later be used as training data for training machine learning algorithms to solve perception tasks for an automated driving system. The first sensor dataset, the second sensor dataset, and the prediction output may be stored S110 in a local data repository ("memory") of the vehicle.

Executable instructions for performing these functions are, optionally, included in a non-transitory computer-readable storage medium or other computer program product configured for execution by one or more processors.

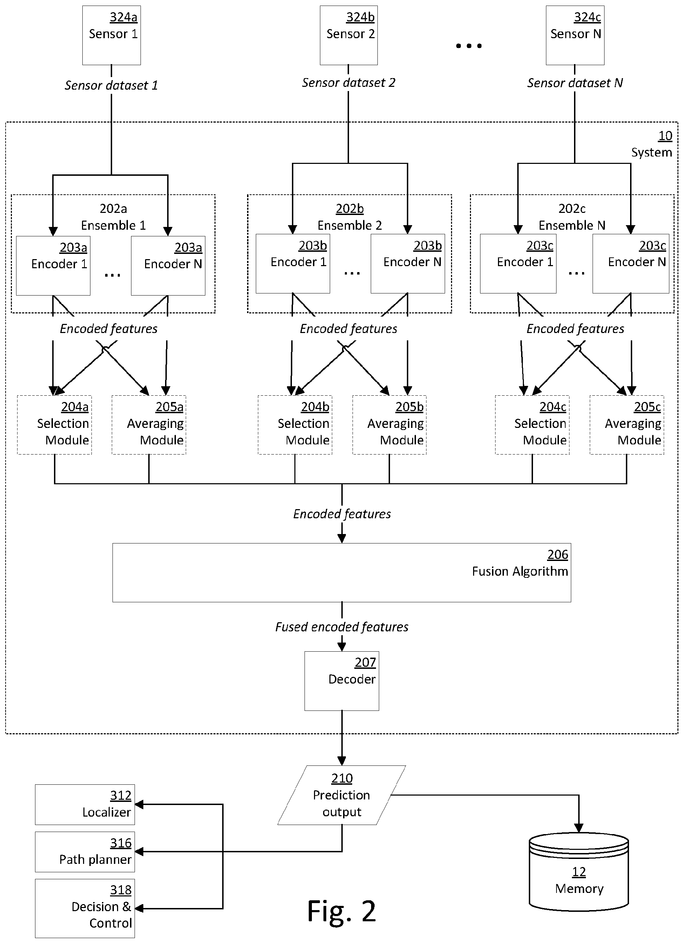

Fig. 2 is a schematic block diagram representation of a system 10 for generating prediction output for an Automated Driving System 310 of a vehicle 1 in accordance with some embodiments. The system 10 comprises control circuitry (e.g. one or more processors) 11 configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. However, in order to better elucidate the herein disclosed embodiments, the control circuitry is represented as various "modules" or blocks in Fig. 2, each of them linked to one or more specific functions of the control circuitry.

The system 10 comprises a first ensemble 202a of encoder networks. The first ensemble of encoder networks comprises two or more encoder networks 203a, where each encoder network 203a is trained to output a set of encoded features based on a sensor dataset output from a first sensor 324a. In other words, a first sensor 324a outputs a first sensor dataset ("Sensor dataset 1") that is provided as an input to each encoder network 203a of the first ensemble 202a of encoder networks. The first ensemble 202a of encoder networks processes this input and outputs two or more sets of encoded features.

The system 10 further comprises a second ensemble 202b of encoder networks. The second ensemble of encoder networks comprises two or more encoder networks 203b, where each encoder network 203b is trained to output a set encoded features based on a sensor dataset output from a second sensor 324b. Here, the first sensor 324a is different from the second sensor 324b. In other words, a second sensor 324b outputs a second sensor dataset ("Sensor dataset 2") that is provided as an input to each encoder network 203b of the second ensemble 202b of encoder networks. The second ensemble 202b of encoder networks processes this input and outputs two or more sets of encoded features.

As illustrated in Fig. 2, the system 10 may comprise additional ensembles of encoders 202c each ensemble 202c having two or more encoder networks 203c that are trained to output encoded features based on a sensor dataset output from additional sensors 324c. Thus, the system 10 is not limited to two ensembles 202a, 202b of encoder networks, but may include further ensembles 202c of encoder networks. Regardless of the number of ensembles, each ensemble is associated with a specific sensor 324a, 324b, 324c. Moreover, it should be noted that the different ensembles 202a, 202b, 202c may comprise a different number of "ensemble members" (i.e., encoder networks). For example, the first ensemble 202a may comprise N1 members, the second ensemble may comprise N2 members (N2≠N1), and the third ensemble 202c may comprise N3 members (N3≠N1 and N3≠N2). However, the the different ensembles 202a, 202b, 202c may comprise the same number of ensemble members.

The system further comprises a fusion algorithm 206 configured to fuse encoded features from two or more different datasets and to output a set of fused encoded features. The fusion algorithm 206 may be configured to perform feature-level fusion (may also be referred to as "mid-level fusion").

In more detail, if the first sensor 324a is a camera, then visual features such as edges, colour, and textures are extracted from images. These features are then encoded using the encoder networks 203a of the first ensemble 202a into a compact, high-dimensional representation (feature vectors or feature maps). Moreover, if the second sensor 324b is a lidar, which provides depth information and object shapes (geometric features) in the form of 3D point clouds. These geometric features are then encoded using the encoder networks 203b of the second ensemble 202b, producing a corresponding feature vector or feature map. Further, a third sensor 324c is a radar that provides velocity, distance, and movement information. This information is encoded using the encoder networks 203c of a third ensemble 202c to capture temporal dynamics, producing its own encoded representations.

Next, the encoded features originating from the camera, lidar, and radar may be spatially aligned, for example the fusion algorithm 206 may be configured to perform a coordinate transformation to map features into a common reference frame. For example, camera pixel locations and LiDAR point clouds are projected into the same 3D space. Further, the encoded features originating from the camera, lidar, and radar may be temporally aligned, in particular if the sensors 324a, 324b, 324c operate at different frequencies. Then, the fusion algorithm 206 may be configured to synchronize the sensors temporally by interpolating or matching data points from each sensor to ensure that corresponding features are compared at the same timestamp. The spatial and temporal alignment may alternatively be performed as a data pre-processing step before being fed to the fusion algorithm 206.

After the alignment (spatial and/or temporal) the fusion algorithm 206 combines the encoded features. There are several methods for performing the fusion, depending on the system's 10 architecture and application. For example, in concatenation-based fusion, the encoded feature vectors from each sensor are concatenated into a single, unified feature vector. Moreover, the fusion algorithm 206 may apply an attention mechanism to weight the importance of features from different sensors. This is useful when certain sensors provide more reliable data in specific scenarios (e.g., LiDAR at night, radar for velocity). The fusion algorithm 206 accordingly assigns dynamic weights to the encoded features based on their relevance. Moreover, in feature averaging or summation fusion, the encoded features from each ensemble 202a, 202b, 202c can be averaged or summed element-wise. In Multi-layer perceptron (MLP) fusion, the fusion algorithm 206 may be in the form of an MLP that is trained to learn complex relationships between the encoded features from different sensors. The MLP receives the concatenated features and learns a fused representation through layers of nonlinear transformations. In, cross-sensor feature correlation fusion, the fusion algorithm 206 computes correlations between features from different sensors to identify patterns that may not be apparent in any individual sensor. The algorithm 206 compares features across modalities and combines them based on their mutual relevance.

Further, the system 10 comprises a decoder network 207 trained to solve a perception task (e.g., object detection, object classification, semantic segmentation, etc.) or a planning task (e.g., path planning, trajectory planning, etc.) for the vehicle based on encoded sensor data features. The system may comprise multiple decoder networks (not shown), each configured to solve different perception tasks.

Accordingly, the system comprises one or more processors 11 and one or more memory storage areas 12 comprising program code, the one or more memory storage areas and the program code being configured to, with the one or more processors 11, cause the system 10 to process a first sensor dataset using the first ensemble 202a of encoder networks in order to obtain a first set of encoded features. The first sensor dataset is output from the first sensor 324a and comprises information about a portion of a surrounding environment of the vehicle. The one or more memory storage areas 12 and the program code are further configured to, with the one or more processors 11, cause the system 10 to process a second sensor dataset using the second ensemble 202b of encoder networks in order to obtain a second set of encoded features. The second sensor dataset is output from the second sensor 324b and comprises information about the portion of the surrounding environment of the vehicle.

Further, the one or more memory storage areas 12 and the program code are further configured to, with the one or more processors 11, cause the system 10 to fuse one or more set of the first set of encoded features with one or more set of the second sets of encoded features using the fusion algorithm 206, and generate a prediction output based on the set of fused encoded features using the decoder network 207.

Moreover, in some embodiments, the one or more memory storage areas 12 and the program code are further configured to, with the one or more processors 11, cause the system 10 to transmit the generated prediction output to one or more downstream functions 312, 316, 318 of the Automated Driving System configured to control the vehicle 1 based on the generated prediction output. Thus, the generated prediction output may be provided as input to one or more downstream functions 312, 316, 318 of the ADS so to control a movement of the vehicle.

Moreover, in some embodiments, the one or more memory storage areas 12 and the program code are further configured to, with the one or more processors 11, cause the system 10 to store the first sensor dataset, the second sensor dataset, and the prediction output, wherein the prediction output forms pseudo-labels for the first sensor dataset and the second sensor dataset.

As mentioned above, in reference to Fig. 1, the fusion algorithm 206 does not necessarily fuse the outputs from each and every encoder network at every sample. For example, the system 10 may comprise a set of selection modules 204a, 204b, 204c, where each selection module is associated with a corresponding ensemble 202a, 202b, 202c of encoder networks. Each selection module 204a, 204b, 204c may accordingly be configured to select a particular encoder network 203a, 203b, 203c within an ensemble to provide the input to the fusion algorithm 206.

The selection modules 204a, 204b, 204c may be implemented in various ways. As mentioned in the foregoing, the various encoder networks within an ensemble may have different "specializations" and the selection may accordingly be based on the current scenario (e.g., highway, urban environment, dense traffic, daytime, night time, rain, snow, etc.). In some embodiments, the different encoder networks 203a, 203b, 203c within the ensembles 202a, 202b, 202c may be used sequentially, so that only one encoder network 203a, 203b, 203c within an ensemble provides an input to the fusion algorithm 206 at each cycle. For example, with a 10 Hz rate and 10 encoder networks in an ensemble, each encoder network within the ensemble will be used once every second. So, encoder network 1 is used at to, encoder network 2 is used at t1 (t0+10ms), encoder network 3 is used at t2 (t1 + 10ms), and so forth.

Thus, the one or more memory storage areas and the program code are further configured to, with the one or more processors, cause the system 10 to select one first set of encoded features from a plurality of first sets of encoded features output from the first ensemble 202a of encoder networks and to select one second set of encoded features from a plurality of second sets of encoded features output from the second ensemble 202b of encoder networks. Further, the one or more memory storage areas and the program code are further configured to, with the one or more processors, cause the system 10 to fuse the selected first set of encoded features with the selected second set of encoded features using the fusion algorithm 206.

The different "specializations" of the encoder networks within an ensemble may be provided by training the encoder networks within an ensemble using different training datasets. Thus, in some embodiments, each encoder network 203a of the first ensemble 202a of encoder networks is trained on different training datasets as compared to the other encoder network(s) of the first ensemble of encoder networks. Similarly, each encoder network 203b of the second ensemble 202b of encoder networks may be trained on different training datasets as compared to the other encoder network(s) of the second ensemble of encoder networks. This approach may be applied to some or every ensemble 202a, 202b, 202c of encoder networks within the system 10.

Moreover, in some embodiments, the outputs from the ensembles 202a, 202b, 202c are averaged before being fed as input to the fusion algorithm 206. Thus, the system 10 may comprise a set of averaging modules 205a, 205b, 205c, where each averaging module is associated with a corresponding ensemble 202a, 202b, 202c of encoder networks. Each averaging module 205a, 205b, 205c may accordingly be configured to perform an averaging operation of the encoded features output from a respective ensemble and to provide the averaged encoded features as input to the fusion algorithm 206.

Thus, the one or more memory storage areas and the program code are further configured to, with the one or more processors, cause the system 10 to average a plurality of first sets of encoded features output from the first ensemble 202a of encoder networks and to average a plurality of second sets of encoded features output from the second ensemble 202b of encoder networks. Further, the one or more memory storage areas and the program code are further configured to, with the one or more processors, cause the system 10 to fuse the averaged first sets of encoded features with the averaged second sets of encoded features using the fusion algorithm 206. Referring to the above example where the encoded features are represented in a BEV grid with vectors in each cell, then the averaging may comprise averaging the vectors in each cell.

In the present context, a "module" may be understood as a discrete, self-contained unit of software designed to perform a specific function or set of related functions within a larger system or software architecture. Each module typically encapsulates particular logic, operations, or processing capabilities, and can interact with other modules or components through defined interfaces. Modules may be implemented in hardware, software, or a combination of both, and are often reusable, configurable, and capable of functioning independently or as part of a more complex system.

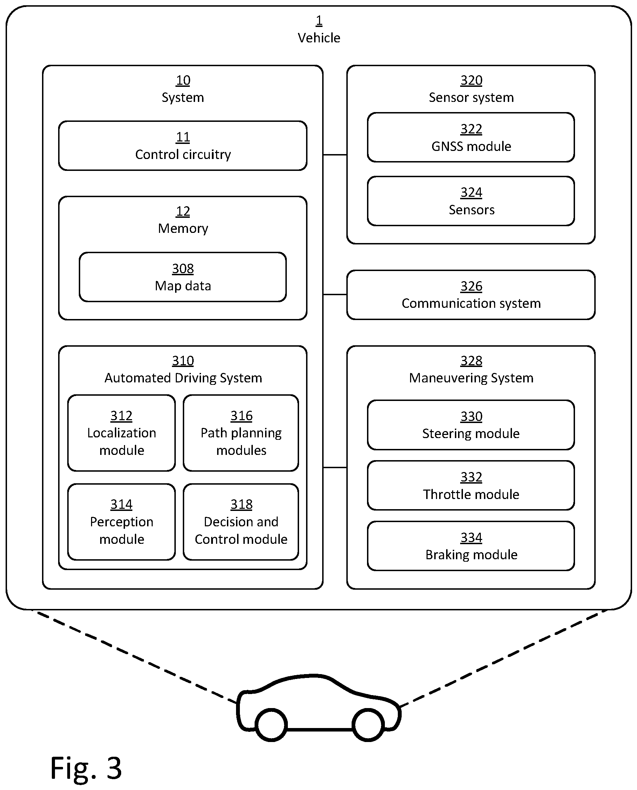

Fig. 3 is a schematic illustration of an ADS-equipped vehicle 1 comprising a system 10 for generating prediction output for the Automated Driving System 310 of the vehicle 1 in accordance with some embodiments. As used herein, a "vehicle" is any form of motorized transport. For example, the vehicle 1 may be any road vehicle such as a car (as illustrated herein), a motorcycle, a (cargo) truck, a bus, etc. However, in some embodiments, the vehicle may be in the form of an autonomous aircraft or boat.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the system 10 may form a part of the ADS 310, i.e. the system 10 may be implemented as a module or feature of the ADS. For example, the system 10 may be implemented as a part of the perception module 314 of the ADS. The control circuitry 11 may comprise one or more processors, such as a central processing unit (CPU), a graphics processing unit (GPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance, in a server in communication with the vehicle, a so-called cloud solution. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various processing steps, fusing steps, averaging steps, selecting steps, transmitting steps, storing steps, and generating steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for generating prediction output for an Automated Driving System of a vehicle, the computer-implemented method comprising:
obtaining (S101), by one or more processors, a first sensor dataset originating from a first sensor, the first sensor dataset comprising information about a portion of a surrounding environment of the vehicle;
obtaining (S102), by one or more processors, a second sensor dataset originating from a second sensor different from the first sensor, the second sensor dataset comprising information about the portion of the surrounding environment of the vehicle;
processing (S103), by one or more processors, the first sensor dataset using a first ensemble of encoder networks, wherein the first ensemble of encoder networks comprises two or more encoder networks, each trained to output a first set of encoded features based on the first sensor dataset;
processing (S104), by one or more processors, the second sensor dataset using a second ensemble of encoder networks, wherein the second ensemble of encoder networks comprises two or more encoder networks, each trained to output a second set encoded features based on the second sensor dataset;
fusing (S107), by one or more processors, one or more sets of the first sets of encoded features with one or more sets of the second sets of encoded features using a fusion algorithm configured to fuse encoded features from two or more different datasets and to output a set of fused encoded features; and
generating (S108), by one or more processors, a prediction output based on the set of fused encoded features using a decoder network trained to solve a perception task or a planning task for the vehicle based on encoded sensor data features.

2. The computer-implemented method (S100) according to claim 1, wherein the first sensor is of a different sensor modality as compared to the second sensor.

3. The computer-implemented method (S100) according to claim 1 or 2, further comprising:
transmitting (S109), by one or more processors, the generated prediction output to one or more downstream functions of the Automated Driving System configured to control the vehicle based on the generated prediction output.

4. The computer-implemented method (S100) according to any one of claims 1-3, further comprising:
storing (S110), by one or more processors, the first sensor dataset, the second sensor dataset, and the prediction output, wherein the prediction output forms pseudo-labels for the first sensor dataset and the second sensor dataset.

5. The computer-implemented method (S100) according to any one of claims 1-4, further comprising:
selecting (S105a), by one or more processors, one first set of encoded features from a plurality of first sets of encoded features output from the first ensemble of encoder networks;
selecting (S105b), by one or more processors, one second set of encoded features from a plurality of second sets of encoded features output from the second ensemble of encoder networks; and
wherein the fusing (S107) comprises fusing, by one or more processors, the selected first set of encoded features with the selected second set of encoded features using the fusion algorithm.

6. The computer-implemented method (S100) according to any one of claims 1-4, further comprising:
averaging (S106a), by one or more processors, a plurality of first sets of encoded features output from the first ensemble of encoder networks;
averaging (S106b), by one or more processors, a plurality of second sets of encoded features output from the second ensemble of encoder networks;
wherein the fusing (S107) comprises fusing, by one or more processors, the averaged first sets of encoded features with the averaged second sets of encoded features using the fusion algorithm.

7. The computer-implemented method (S100) according to any one of claims 1-6, wherein each encoder network of the first ensemble of encoder networks is trained on different training datasets as compared to the other encoder network(s) of the first ensemble of encoder networks; or
wherein each encoder network of the second ensemble of encoder networks is trained on different training datasets as compared to the other encoder network(s) of the second ensemble of encoder networks.

8. A computer program product comprising instructions which, when the program is executed by a computer, causes the computer to carry out the computer-implemented method (S100) according to any one of claims 1-7.

9. A computer-readable storage medium comprising instructions which, when executed by a computer, causes the computer to carry out the computer-implemented method (S100) according to any one of claims 1-7.

10. A system (10) for generating prediction output for an Automated Driving System (310) of a vehicle (1), the system comprising:
a first ensemble (202a) of encoder networks, wherein the first ensemble of encoder networks comprises two or more encoder networks (203a), each trained to output a set of encoded features based on a sensor dataset output from a first sensor (324a);
a second ensemble (202b) of encoder networks, wherein the second ensemble of encoder networks comprises two or more encoder networks (203b), each trained to output a set encoded features based on a sensor dataset output from a second sensor (324b), wherein the first sensor (324a) is different from the second sensor (324b);
a fusion algorithm (206) configured to fuse encoded features from two or more different datasets and to output a set of fused encoded features;
a decoder network (207) trained to solve a perception task or a planning task for the vehicle based on encoded sensor data features;
one or more processors (11) and one or more memory storage areas (12) comprising program code, the one or more memory storage areas and the program code being configured to, with the one or more processors, cause the system (10) to at least:
process a first sensor dataset using the first ensemble (202a) of encoder networks in order to obtain a first set of encoded features, the first sensor dataset comprising information about a portion of a surrounding environment of the vehicle;
process a second sensor dataset using the second ensemble (202b) of encoder networks in order to obtain a second set of encoded features, the second sensor dataset comprising information about the portion of the surrounding environment of the vehicle;
fuse one or more set of the first set of encoded features with one or more set of the second sets of encoded features using the fusion algorithm (206); and
generate a prediction output based on the set of fused encoded features using the decoder network (207).

11. The system (10) according to claim 10, wherein the first sensor (324a) is of a different sensor modality as compared to the second sensor (324b).

12. The system (10) according to claim 10 or 11, wherein the one or more memory storage areas and the program code are further configured to, with the one or more processors, cause the system (10) to at least:
transmit the generated prediction output to one or more downstream functions (312, 316, 318) of the Automated Driving System configured to control the vehicle (1) based on the generated prediction output.

13. The system (10) according to any one of claims 10-12, wherein the one or more memory storage areas and the program code are further configured to, with the one or more processors, cause the system to at least:
store the first sensor dataset, the second sensor dataset, and the prediction output, wherein the prediction output forms pseudo-labels for the first sensor dataset and the second sensor dataset.

14. The system (10) according to any one of claims 10-13, wherein each encoder network (203a) of the first ensemble (202a) of encoder networks is trained on different training datasets as compared to the other encoder network(s) of the first ensemble of encoder networks; or
wherein each encoder network (203b) of the second ensemble (202b) of encoder networks is trained on different training datasets as compared to the other encoder network(s) of the second ensemble of encoder networks.

15. A vehicle (1) comprising:
a first sensor (324a) and a second sensor (324b), wherein the first sensor (324a) is different from the second sensor (324b);
a system (10) for generating predictive output for an Automated Driving System of the vehicle, the system comprising:
a first ensemble (202a) of encoder networks, wherein the first ensemble of encoder networks comprises two or more encoder networks (203a), each trained to output a set of encoded features based on a sensor dataset output from the first sensor (324a);
a second ensemble (202b) of encoder networks, wherein the second ensemble of encoder networks comprises two or more encoder networks (203b), each trained to output a set encoded features based on a sensor dataset output from the second sensor (324b);
a fusion algorithm (206) configured to fuse encoded features from two or more different datasets and to output a set of fused encoded features;
a decoder network (207) trained to solve a perception task or a planning task for the vehicle based on encoded sensor data features;
one or more processors (11) and one or more memory storage areas (12) comprising program code, the one or more memory storage areas and the program code being configured to, with the one or more processors, cause the system to at least:
process a first sensor dataset using the first ensemble (202a) of encoder networks in order to obtain a first set of encoded features, the first sensor dataset comprising information about a portion of a surrounding environment of the vehicle;
process a second sensor dataset using the second ensemble (202b) of encoder networks in order to obtain a second set of encoded features, the second sensor dataset comprising information about the portion of the surrounding environment of the vehicle;
fuse one or more set of the first set of encoded features with one or more set of the second sets of encoded features using a fusion algorithm (206); and
generate a prediction output based on the set of fused encoded features using the decoder network (207).
